# EUROPEAN PATENT APPLICATION

(11) **EP 1 804 215 A1**
(43) Date of publication of application: **04.07.2007**
(21) Application number: 05292798.5
(22) Date of filing: 27.12.2005
(51) Int. Cl.: G06T 15/20

(54) **Method and device for multiperspective display of objects**

(71) Applicant: FRANCE TELECOM, 75015 Paris (FR)
(72) Inventor: Tosa, Naoko, Kyoto 602-8104 (JP); Nakatsu, Ryohei, Koganei, Tokyo 184-0015 (JP); Henry, Thomas, 35200 Rennes (FR)

(57) **Abstract**

For implementing the method, the device comprises an object display unit (92) for providing said human being with a set of digital pictograms each defining an object, a virtual space display unit (91) for composing a landscape with defined objects, a control unit (8) for allowing said human being to select a pictogram in the set and to place said pictogram on a chosen location in the virtual space display unit, and an object transformation unit (12) for displaying on said location a view of the by the pictogram defined object that gives to the human being an impression of distance of the object according to the location where the human being placed the pictogram.

## Description

The invention is in the field of electronic communication. Human communication is composed of both verbal and non verbal elements. Human communicators make selective, combined or integrated use of them according to the situation.

In the field of electronic communication, electronic devices like computers, mobile phones or others are used generally mainly in a verbal context because words in a written or vocal form can today be easily coded and therefore transmitted or analysed. In such forms, the communication is not always complete and satisfying.

Except when written by good authors or poets, text generally rarely transmit emotions and when it is the case for a receiving human being, it is not necessarily easy to be analysed by a machine.

The voice is able to transmit more than pure words. System and method for automatically classifying the affective content of speech already exist like the one disclosed in the International patent application W09922364 wherein acoustic measures are employed for indicating an emotional state of the speaker. Nevertheless more non verbal information than in sound level or intonation can be transmitted when persons physically meet one another like for example satisfaction translated by a smile on the face or tiredness translated by an attitude.

Even video conference adding real time images to voice suffers from some lacks and people often prefer to physically meet one another when a better perception of the interlocutor is suited.

Sensors are disclosed in prior art for adding content in communication like for example the one disclosed by the French patent application FR2853100 wherein sensory information like heart beat of the interlocutor is coupled to a coding circuit that transforms the information to an emotional state code.

There are other psychic feelings of human being that are not necessary translated by heart beat like for example conscious or unconscious internal selves. When many technical means of the state of the art are oriented to capturing perceptible features of human being like intonations in the voice, attitude displayed on the face or heart beat, a need is perceived for technical means able to capture internal mood of a human being. That is not easy because an internal mood doesn't necessarily manifest itself by physical features.

The view for example of a landscape interacts with the internal mood and vice versa an interaction of a human being with a virtual space is representative of its internal mood.

Technologies for the construction of virtual space using images, videos, computer graphics, and so on have been widely used. Using these technologies, people can get into the generated virtual space, move around in the space and interact with various objects displayed in the space such as computer graphics based characters or animals. Therefore these technologies have been applied to virtual reality, games, and interactive art, and so on.

For example, in the case of Role Playing Games (RPG), games played in three dimensional virtual space based on three dimensional computer graphics became very popular. In these RPG games, by controlling their avatars represented by a computer graphics model, users move around in a three dimensional virtual space, interact with other computer characters, thus enjoy the various kinds of events and thus the stories.

To enhance the feeling of presence players feel in these games, usually a large screen and/or display is used for the display of the generated virtual space. These technologies, however, had a limit to give enough feeling of presence.

The prior technologies/systems have many drawbacks. In the case of displaying the generated space on a big screen, it is necessary to set a large distance between the screen and the projector. On the other hand, players/users watch the screen with a shorter distance between them and the screen. This means that the view point of the players do not match the point of projection. The image on the screen, as it is projected from far away projection point, becomes flat image. Even though players look the image at the near point, this is like a situation when people look movie image just near the screen at movie theaters. In the case of displaying the generated space on a concave screen, usually the projector is set at the center point of the sphere. At the same time, the eye points of the players are set at the same point. Such a method has several merits. One is that, as the image fills all the view area of the players, it is easy for them to have the feeling that they are really in a virtual space. In addition to this, at some points the image corresponding to looking up image is displayed and at other points the looking down image is displayed. Therefore it is possible to give the players a high level feeling of presence. This system, however, has the drawback that it is very expensive. The system needs a dedicated and expensive concave screen. Also it needs a projector dedicated to this type of projection. Therefore the whole system would become very expensive.

A goal of the invention is to give players very high level of sensitivity based on a cheap method of using a flat screen.

An object of the invention is a method for interacting with a human being in a high presence context. The method comprises a step that provides the human being with a set of digital pictograms each defining an object and that provides a frame on a digital screen for composing a landscape with defined objects in the frame. A step of the method for allowing said human being to select a pictogram in the set and to place said pictogram on a chosen location in the frame is followed by a step wherein on said location a view of the by the pictogram defined object is displayed that gives to the human being an impression of distance (near or far from the user) of the object according to the location in the frame where the human being placed the pictogram.

Particularly the object is viewed nearer for a pictogram placed in the bottom of the frame and farther for a pictogram placed in the top of the frame. By utilizing the technology proposed here, a feeling of looking up and looking down is realized. And this leads to the feeling of very high level of presence and/or reality.

More particularly a computer graphics model is associated with the selected pictogram wherein varying at least one parameter of the graphics model gives an impression of distance by displaying.

Advantageously in the displaying step, a value of the parameter is retrieved in a table wherein different positions on the screen are associated each with a value of said parameter.

The table can be previously created by receiving an existing picture, matching a computer graphics model with an extracted object from the existing picture, and constructing the table by associating the value of said parameter of the matched computer graphics model with a position of said extracted object in the existing picture.

More precisely the existing picture is a Sansui picture.

An other object of the invention is a device for interacting with a human being in a high presence context. The device comprises an object display unit for providing said human being with a set of digital pictograms each defining an object, a virtual space display unit for composing a landscape with defined objects, a control unit for allowing said human being to select a pictogram in the set and to place said pictogram on a chosen location in the virtual space display unit. The device comprises also an object transformation unit for displaying on said location a view of the by the pictogram defined object that gives to the human being an impression of distance of the object according to the location where the human being placed the pictogram.

In the device, an object storage unit is suitable for associating a computer graphics model with the selected pictogram wherein varying at least one parameter of the graphics model gives an impression of distance by displaying.

A particular device comprises a table wherein different positions in the virtual space display unit are associated each with a value of said parameter.

Advantageously a part of the device or another device comprises a table construction unit arranged for receiving an existing picture, a matching unit for retrieving a computer graphics model representative of an extracted object from the existing picture, and a data memory for constructing the table by associating the value of said parameter of the retrieved computer graphics model with a position of said extracted object in the existing picture.

Still another object of the invention is a program for interacting with a human being in a high presence context, comprising the computer executable instructions of providing said human being with a set of digital pictograms each defining an object and a frame on a digital screen for composing a landscape with defined objects in the frame, allowing said human being to select a pictogram in the set and to place said pictogram on a chosen location in the frame, and displaying on said location a view of the by the pictogram defined object that gives to the human being an impression of distance of the object according to the location in the frame where the human being placed the pictogram.

Particularly the program is arranged for viewing the object nearer for a pictogram placed in the bottom of the frame and farther for a pictogram placed in the top of the frame.

More particularly the program comprises instructions for associating a computer graphics model with the selected pictogram and instructions for retrieving a value of at least one parameter of said computer graphics model in a table wherein different positions on the screen are associated each with a value of said parameter.

Advantageously in the program the parameter is a rotation angle of an object when viewed in a Sansui picture.

Embodiments of the present invention will now be described by way of example only with reference to the accompanying drawings, where like parts are provided with corresponding reference numerals, and in which:
Figure 1 is a flow chart of a method according to an embodiment of the present invention;
Figure 2 shows steps for performing improvements of the method according to the invention;
Figure 3 shows the concept of a graphic representation useful for performing of the method according to the invention;
Figure 4 is a schematic diagram of a device for implementing the invention;
Figures 5 to 7 are schemes of components of the device presented in figure 4.

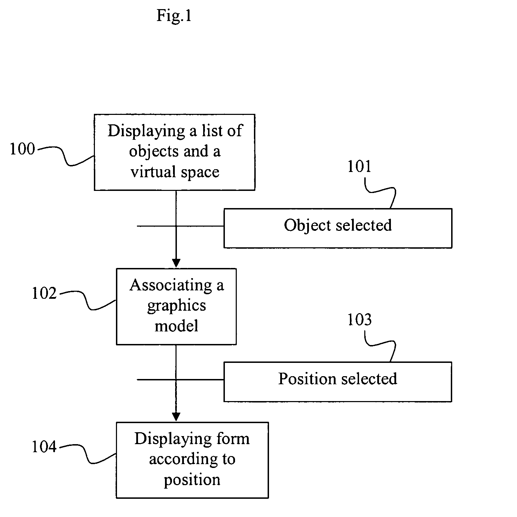

A method for interacting with a human being in a high presence context is illustrated by figure 1. In an initial step 100, a list of objects in the form of a set of digital pictograms and a frame for a virtual space are displayed by a machine on a screen.

A transition 101 is validated when the machine detects an object defined by the pictogram that is selected by the human being who is the user of the machine. In a step 102 activated by the transition 101, a computer graphics model is associated with the selected pictogram. The graphics model comprises at least one parameter, preferably a rotation angle around a horizontal axe in the plane of the screen, for displaying a view of the object according to a value of the parameter on the screen. The parameter being the rotation angle, a value presenting the object as when viewed from above is suitable for giving the user a feeling similar to the one that he gets when he looks down on a near object. A value presenting the object as in front view is suitable for giving the user a feeling similar to the one that he gets when he is facing a neighbouring object, not very near and not too far. A value presenting the object as when viewed by looking up is suitable for giving the user a feeling similar to the one that he gets when he looks on a far object standing taller behind other nearer objects. In that way each value of the rotation angle gives a different impression of distance of the displayed object.

A transition 103 is validated when the machine detects a position that is selected by the human being for placing the object in the frame of the virtual space on the screen. In a step 104 activated by the transition 103, a view of the selected object is displayed on the location where the user placed the object. When a computer graphics model is used, its value is determined by the location for giving an impression of distance according to. Advantageously, the object is viewed nearer for a pictogram placed in the bottom of the frame and farther for a pictogram placed in the top of the frame. Indeed, the user looks down on an object that is placed on the bottom of the screen and up on an object that is placed on the top of the screen. The value of the parameter can be calculated or more particularly is retrieved in a table wherein different positions on the screen are associated each with a value of the parameter.

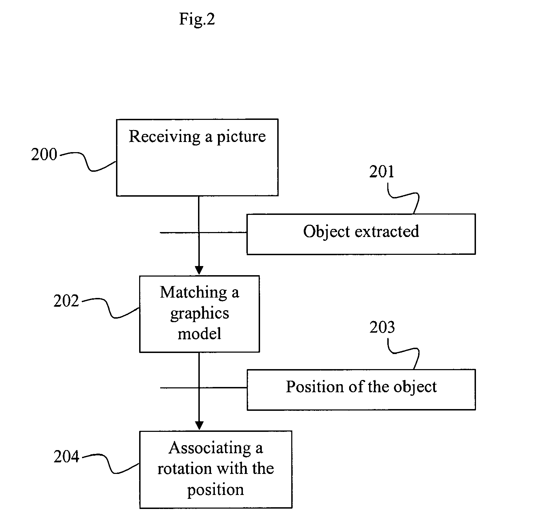

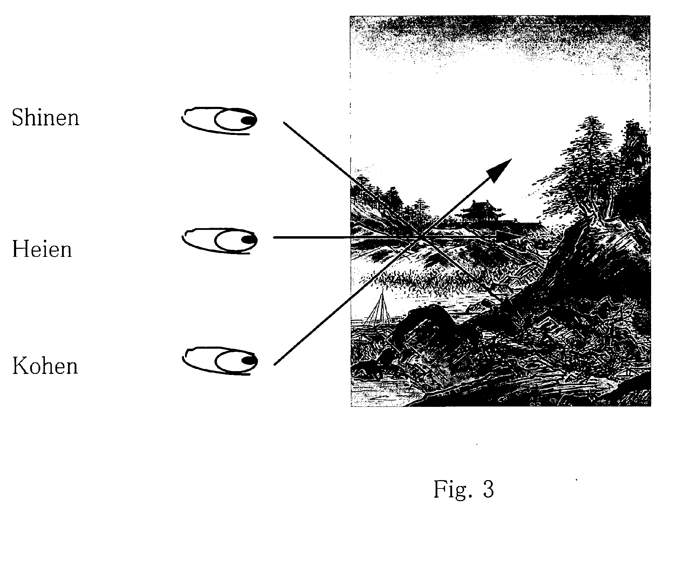

Different methods can be employed for creating the table. A preferred embodiment is now described with reference to figure 2. Before executing the steps specified wit reference to figure 1, a step 200 is for previously receiving an existing picture. Advantageously, the existing picture is a Sansui picture latter explained with reference to figure 3.

A transition 201 is validated each time an object is extracted from the existing picture. In a step 202 activated by the transition 201, a computer graphics model is retrieved for matching with the extracted object. The same time, a transition 202 is validated by a measurement of the position of the extracted object in the picture. In a step 204 activated by the transition 203, the table is constructed by associating the current value of the parameter of the matched computer graphics model with the measured position of the object that is extracted from the existing picture. For the parameter being the angle of rotation, the model is matched by rotating the model and the value of the angle is associated with the position in the table.

A system implementing the above specified method by means of computer executable program instructions can select various kinds of object data corresponding to those selected and placed by a user on a flat screen/display and displays the data on the display. The key technology here is that in the data selection process, depending on the place of the object indicated by a user the system selects adequate data set or transforms the data set into the adequate form. Thus each object shown on a display varies its form depending on the place of the object. If the object is placed in the upper part of the display, then the object has the form that a user is looking up the object. If the object is placed in the lower part of the display, it has the form that a user is looking down the object. Based on this process, the system has the merit of constructing a virtual space with far higher sense of presence than the conventional system with rather cheap cost.

Figure 3 illustrate an example of a Sansui picture and its basic architecture. In Sansui picture three types of eye directions are included which is the basis to achieve the high level of presence feeling. These three types of eye directions are called Kohen, Heien, and Shinen. Kohen is a picture corresponding to the one when people look up objects they look. Heien is a picture corresponding to the eye direction of looking straightly forward. And Shinen is a picture corresponding to the eye direction of looking down. Objects in the upper part of Sansui picture usually have the feature of Kohen. Similarly, objects in the middle part of them are Heien pictures and objects at the lower part of them are Shinen pictures.

As Sansui pictures have the basic features described above, when people look at the upper side of Sansui pictures, they have the feeling that they are looking up the objects. Similarly, when people look the lower part of the pictures, they have the feeling that they are looking down the objects.

Therefore, even if the Sansui picture they are watching is drawn in a lather small frame, people have the feeling of the presence and as the results they have a feeling that they really look at natural scenery with very wide views.

The technology proposed here is, applying the basic feature of Sansui pictures, to generate image with high level of presence on a screen. The basic mechanism of the technology is as follows.
(1) Users can select the objects they want from eye-cons or pictograms displayed on the display and put them where they like. Thus they can design a virtual space they want to generate.
(2) The system selects form its database three dimensional models of the objects user selected and set them on the place suggested by the users.
(3) When the system selects and put the three dimensional model of the objects, depending on the place of the object, the system translates the objects. For example for the objects displayed in the upper part of the display, the system changes it to a three dimensional model corresponding to the view of looking up. Similarly, for the objects in the lower part of the display, they are translated into those corresponding to the view of looking down.
   In addition to the above basic idea, the relational data between the positions of each object put by a user and the viewpoint of the object, in other words the rotation angle of the object, is decided by analyzing various Sansui pictures. When each object is placed at a position indicated by a user, it is rotated based on the rotation data indicated above and thus figures corresponding to looking up view or looking down view are generated. The detailed process is the follows.

(1) Various types of objects that frequently appear in Sansui pictures are prepared beforehand as 3D computer graphics models. In Sansui pictures such objects as mountain, cloud, house, and traveler frequently appear. Therefore it is possible to prepare almost every object that appears in Sansui pictures by analyzing Sansui pictures.
(2) The relation between the position of an object in Sansui picture and its viewpoint such as looking up viewpoint or looking down viewpoint is stored based on the analysis of Sansui pictures. More precisely, matching is carried out between each object picked up from Sansui pictures and a model corresponding to the object stored in the 3D model storage. And the relation between the position in Sansui picture (from +100 to -100, for example) and a rotation angle (from +90 degree to -90 degree) is decided and is stored as a table.
(3) When an object is put at a position indicated by a user, the rotation angle corresponding to the position is decided by referring to the table. Then the object is rotated indicated by the angle and then put on the display.
(4) Based on the above method, an object displayed freely by a user has an appearance of a real Sansui picture. This means that by picking and placing any object and user can create any kind of Sansui picture he/she wants. At the same time, as each object in the picture has a rotation angle just in Sansui picture and thus give users the feeling that they created and look real Sansui picture.

Thus the virtual space generated on the screen/display has the same feature as Sansui pictures. This makes it possible to give the people a feeling as if they are looking at a real scene. Thus, even if the generated scene is shown in a rather small space, it gives the feeling of real presence.

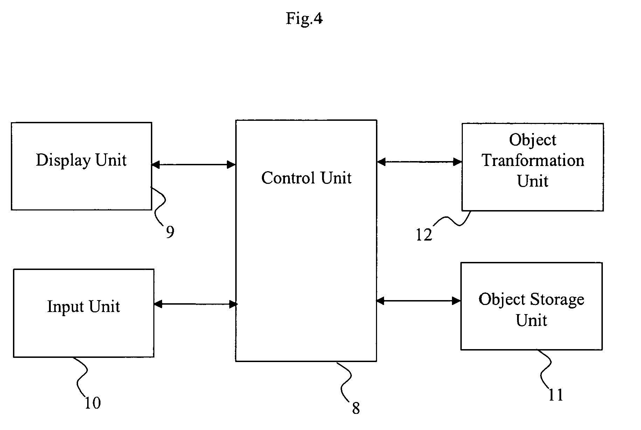

Figure 4 illustrates a typical example of the structure of the system realized depending on the technology proposed here. The system comprises a control unit 8, a display unit 9, an input unit 10, an object storage unit 11 and an object transformation unit 12.

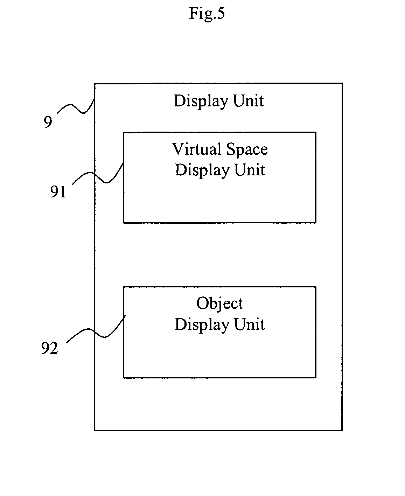

With reference to Figure 5 the display unit 9 comprises a virtual space display unit 91 and an object display unit 92. The virtual space display unit 91 is arranged for displaying the virtual space the user is going to construct or has constructed. The object display unit 92 is arranged for displaying various kinds of objects which are used for the user to construct the virtual space.

By controlling the input unit 10, the user can select several objects displayed on the object display unit 92 and put them where he/she wants. The control unit 8 comprises for example a mouse or a keyboard. More precisely, when a mouse is used as a control module, the user can select any object by clicking one of the objects on the virtual object display unit 92 and by dropping it to where he/she wants; he/she can put it there. The control unit 8, depending on the place where the object is placed obtains the position data of the object (for example from +100 as upper limit to -100 as lower limit) and sends the information of the object type and the position of it to the objects storage unit 11 and the object transformation unit 12. In the object storage unit 11, each of the object data corresponding to the one displayed on the virtual space object display unit is stored. As an object data, three dimensional computer graphics model is prepared beforehand and is stored in the object storage unit 11. The object transformation unit 12 is arranged for receiving the 3D object model data indicated by the control unit 8 from the object storage unit 11.

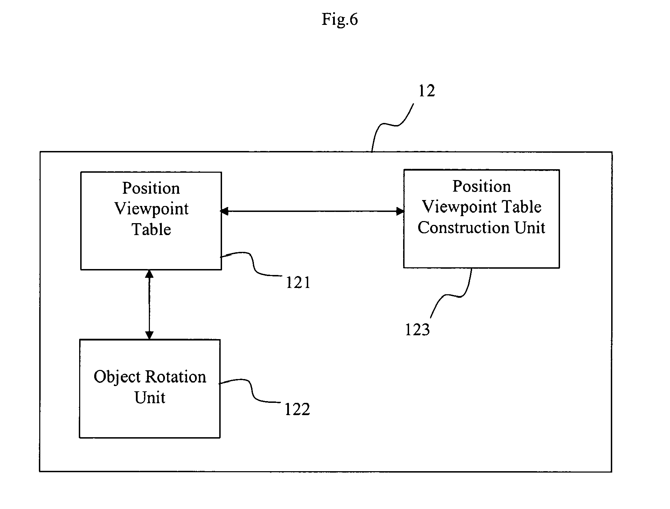

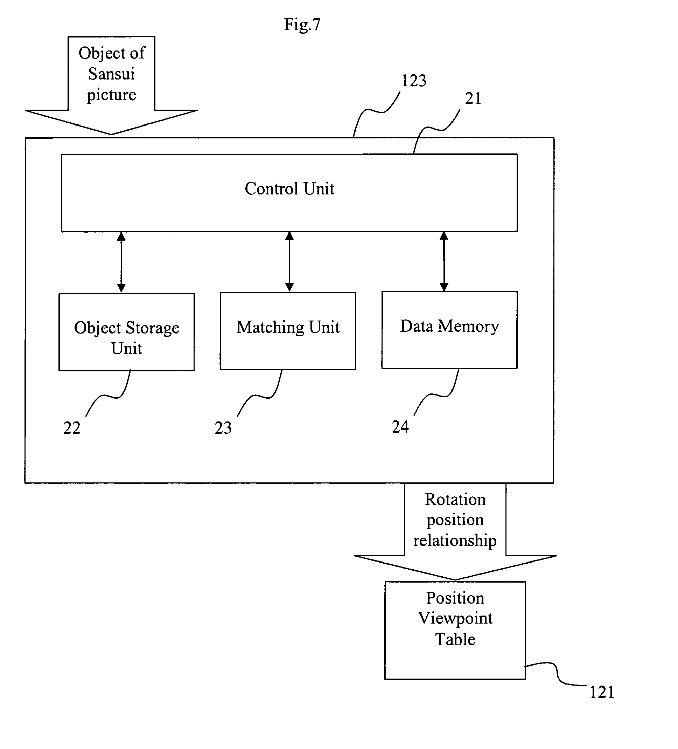

With reference to Figure 6 the object transformation unit 12 comprises a position-viewpoint table 121, an object rotation unit 122 and a position-viewpoint table construction unit 123. The potion-viewpoint table 121 contains a relationship between a position (from +100 to -100) of an object and a rotation angle (+90 to -90) of said object. Using this table the rotation angle depending on the object is obtained. The object rotation unit 122 rotates the 3D model corresponding to the object using the obtained rotation angle and sends it to the control unit 8. The data stored in the position-viewpoint table 121 are previously generated by the position-viewpoint table generation unit 123 as later explained with reference to figure 7. The control unit 8 carries out the process of displaying the object on the indicated position on the virtual space display unit 92. The display unit displays the object indicated by the control unit at the place indicated by the control unit.

With reference to Figure 7 the position-viewpoint table construction unit 123 comprises a control unit 21, an object storage unit 22, a matching unit 23, and a data memory 24. In the object storage unit 22, various types of objects that frequently appear in Sansui pictures are stored as 3D computer graphics models. The position-viewpoint table construction unit 123 is arranged for receiving as an input data, a 2D object data picked up from a Sansui picture as well as its position (from +100 to -100) in the Sansui picture. The control unit 21 is arranged for obtaining the 3D model of an object corresponding to the input data and for sending both of the data to the matching unit 23. The matching unit 23 is arranged for carrying out the matching between the 2D object data given as an input and the 3D object data obtained from the object storage 22. As a result the rotation angle (from +90 degree to -90 degree) of the 3D data that means the rotation angle of a 2D object in the Sansui picture is obtained. This means that the obtained rotation angle precisely reflects the appearance of the Sansui picture such as Kohen, Heien, or Shinen. The set of data, the position and the rotation angle, are stored in the data memory 24. The unit 123 is arranged for averaging the data stored in the data memory 24 after having received a sufficient number of Sansui pictures, so as to construct the position-viewpoint table 121.

## Claims

1. A method for interacting with a human being in a high presence context, comprising the steps of:
- providing (100) said human being with a set of digital pictograms each defining an object and a frame on a digital screen for composing a landscape with defined objects in the frame;
- allowing (101, 103) said human being to select a pictogram in the set and to place said pictogram on a chosen location in the frame;
- displaying (104) on said location a view of the by the pictogram defined object that gives to the human being an impression of distance of the object according to the location in the frame where the human being placed the pictogram.

2. A method according to claim 1 wherein the object is viewed nearer for a pictogram placed in the bottom of the frame and farther for a pictogram placed in the top of the frame.

3. A method according to claim 1 or 2, comprising a step (102) for associating a computer graphics model with the selected pictogram wherein varying at least one parameter of the graphics model gives an impression of distance by displaying.

4. A method according to anyone of preceding claims wherein in displaying step (104), a value of said parameter is retrieved in a table wherein different positions on the screen are associated each with a value of said parameter.

5. A method according to claim 4 comprising previously the steps of:
- receiving (200) an existing picture;
- matching (202) a computer graphics model with an extracted object from the existing picture;
- constructing (204) the table by associating the value of said parameter of the matched computer graphics model with a position of said extracted object in the existing picture.

6. A method according to claim 5 wherein said existing picture is a Sansui picture.

7. A device for interacting with a human being in a high presence context, comprising:
- an object display unit (92) for providing said human being with a set of digital pictograms each defining an object;
- a virtual space display unit (91) for composing a landscape with defined objects;
- a control unit (8) for allowing said human being to select a pictogram in the set and to place said pictogram on a chosen location in the virtual space display unit;
- an object transformation unit (12) for displaying on said location a view of the by the pictogram defined object that gives to the human being an impression of distance of the object according to the location where the human being placed the pictogram.

8. A device according to claim 7, comprising an object storage unit (11) for associating a computer graphics model with the selected pictogram wherein varying at least one parameter of the graphics model gives an impression of distance by displaying.

9. A device according to claim 7 or 8 comprising a table (121) wherein different positions in the virtual space display unit are associated each with a value of said parameter.

10. A device according to claim 9 comprising:
- a table construction unit (123) arranged for receiving an existing picture;
- a matching unit (23) for retrieving a computer graphics model representative of an extracted object from the existing picture;
- a data memory (24) for constructing the table by associating the value of said parameter of the retrieved computer graphics model with a position of said extracted object in the existing picture.

11. A program for interacting with a human being in a high presence context, comprising the computer executable instructions of:
- providing said human being with a set of digital pictograms each defining an object and a frame on a digital screen for composing a landscape with defined objects in the frame;
- allowing said human being to select a pictogram in the set and to place said pictogram on a chosen location in the frame;
- displaying on said location a view of the by the pictogram defined object that gives to the human being an impression of distance of the object according to the location in the frame where the human being placed the pictogram.

12. A program according to claim 1 arranged for viewing the object nearer for a pictogram placed in the bottom of the frame and farther for a pictogram placed in the top of the frame.

13. A program according to claim 11 or 12, comprising instructions for associating a computer graphics model with the selected pictogram and instructions for retrieving a value of at least one parameter of said computer graphics model in a table wherein different positions on the screen are associated each with a value of said parameter.

14. A program according to claim 13 wherein said parameter is a rotation angle of an object when viewed in a Sansui picture.
